# EUROPÄISCHE PATENTSCHRIFT

(11) **EP 0 601 462 B1**
(45) Veröffentlichungstag und Bekanntmachung des Hinweises auf die Patenterteilung: **05.03.1997**
(21) Anmeldenummer: 93119369.2
(22) Anmeldetag: 01.12.1993
(51) Int. Cl.: H01H 21/50, B60Q 1/42

(54) **Schalter, insbesondere Lenkstockschalter**
Switch, in particular steering column switch
Commutateur, notamment commutateur fixé à la colonne de direction

(30) Priorität: 09.12.1992 DE 4241481
(43) Veröffentlichungstag der Anmeldung: 15.06.1994
(73) Patentinhaber: TRW FAHRZEUGELEKTRIK GmbH & CO. KG, D-78315 Radolfzell (DE)
(72) Erfinder: John, Harry, D-78239 Rielasingen-Worblingen (DE)
(74) Vertreter: Schieschke, Klaus, Dipl.-Ing.

(56) Entgegenhaltungen:
- EP-A- 0 356 789
- DE-A- 2 050 157
- DE-A- 2 335 379
- DE-C- 3 803 125
- US-A- 2 406 818

## Beschreibung

Die Erfindung betrifft einen Schalter, insbesondere Lenkstockschalter, mit den Merkmalen des Oberbegriffs des Anspruchs 1.

Als allgemeiner Stand der Technik sind bereits Schalter bekannt, die mittels eines in wenigstens drei Verrastungen einer Rastkurve eingreifbaren Rastelements wenigstens drei verschiedene Schaltstellungen ermöglichen (DE 40 08 248 C1, DE 31 28 752 A1, DE 36 02 246 C1, DE 33 04 942 C2.)

Bei diesen Schaltern ist das zum Übergang von einer Schaltstellung in eine weitere Schaltstellung erforderliche Schaltmoment unabhängig von der Bewegungsrichtung des Schaltteils.

Bei bestimmten Schalteranwendungen besteht jedoch die Anforderung, das Schaltmoment abhängig von der Bewegungsrichtung des Schaltteils unterschiedlich zu gestalten, so daß sich beispielsweise beim Einschalten einer bestimmten Funktion, d.h. beim Übergang von einer Schalterstellung in eine benachbarte Schalterstellung, ein höheres Schaltmoment ergibt, als beim Ausschalten dieser Funktion, d.h. bei der Rückbewegung des Schaltteils in die Ausgangsstellung.

Hierzu ist bereits bekannt, Lenkstockschalter so auszubilden, daß deren Rastkurve Verrastungen mit unterschiedlichen Winkeln aufweist.

Obwohl hierdurch abhängig von der Bewegungsrichtung des Schaltteils unterschiedliche Schaltkräfte erzielt werden können, ergibt sich ein erheblicher Herstellungs- und Kostenaufwand. Insbesondere bei Schaltwinkeln von unter 10° resultiert daraus ein Kraft-Weg-Diagramm, welches erkennen läßt, daß eine Beeinträchtigung des Schaltgefühls vorliegt. Hieraus folgt eine Minderung des Bedienungskomforts.

Des weiteren ist aus der DE 35 02 649 A1 ein Lenkstockschalter zur Fahrtrichtungsanzeige an Kraftfahrzeugen bekannt, der durch die Verwendung zweier in jeweils eine Rastkurve eingreifende Rastelemente ein möglichst geräuscharmes, hohen Komfortansprüchen genügendes Schaltverhalten realisiert. Ein weiterer aus der DE-A-2 050 157 bekannter Lenkstockschalter zur Fahrtrichtungsanzeige an Kraftfahrzeugen weist zu einer Hauptrastkurve eine Hilfsrastkurve mit Begrenzungsanschlägen auf, die als Zwischenschaltstellungen ohne Einrast fungiert und keinen Einfluß auf die Rückstellcharakteristik der Hauptrastkurve hat. Diese Konstruktionen ermöglichen jedoch nur zwei Schaltstellungen.

Der Erfindung liegt daher die Aufgabe zugrunde, einen Schalter, insbesondere Lenkstockschalter, der eingangs genannten Art so weiterzubilden, daß abhängig von der Bewegungsrichtung des Schaltteils unterschiedliche, jedoch über den gesamten Schaltbereich des Schalthebels gleichbleibende Schaltmomente erreicht werden, die beim Entwurf des Schaltverhaltens frei wählbar sind.

Diese Aufgabe wird erfindungsgemäß mit den Merkmalen des Anspruchs 1 gelöst.

Damit ergibt sich vorteilhafterweise ein Zusammenwirken von zwei Rastkurven mit der Folge eines wesentlich verbesserten Kraft-Weg-Diagramms, und zwar sowohl beim Ausschalten als auch beim Einschalten. Es läßt sich beispielsweise die Vorgabe von Einschaltkraft 7N und Ausschaltkraft 4N nahezu optimal realisieren.

In weiteren Ausgestaltungen der Erfindung kann das Schaltteil die beiden Rastelemente und das Grundteil die beiden Rastkurven aufweisen. Hierdurch ergibt sich eine einfache Bauform.

Nach einem anderen Merkmal der Erfindung kann die zweite Rastkurve einen stetigen Kurvenverlauf besitzen, beispielsweise als Gerade, als Sinoide, als Teil einer Hyperbel oder einer Parabel ausgebildet sein.

Alternativ besteht auch die Möglichkeit, daß die zweite Rastkurve als Druck-, Blatt- oder Spiralfeder ausgebildet ist. Eine Vereinfachung der Bauform ergibt sich daraus, daß die zweite Rastkurve unmittelbar an die erste Rastkurve anschließen kann.

In weiterer Ausgestaltung der Erfindung ist der Schalter so beschaffen, daß der Schaltwinkel zwischen zwei Verrastungen der ersten Rastkurve jeweils gleich ist. Hierbei kann der Schaltwinkel maximal 10° betragen. Der gesamte Schaltbereich des Schaltteils kann maximal 40° umfassen.

Die Erfindung wird nachfolgend anhand eines in den Zeichnungen dargestellten Ausführungsbeispieles näher beschrieben. In der Zeichnung zeigen:
- Fig. 1: eine schematische Draufsicht auf einen Lenkstockschalter, teils gebrochen;
- Fig. 2: ein Beispiel einer Vorgabekurve eines Kraft-Weg-Diagramms für einen Lenkstockschalter;
- Fig. 3: ein realisiertes Kraft-Weg-Diagramm für diesen erfindungsgemäßen Schalter.

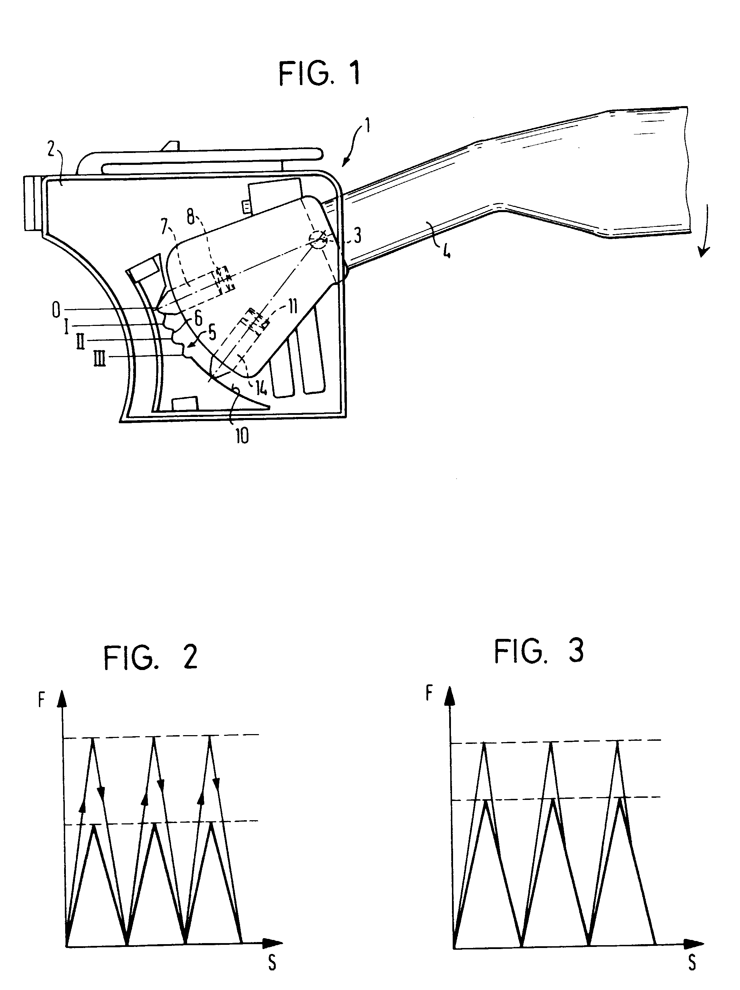

In Fig. 1 ist schematisch ein Schalter 1, insbesondere ein Lenkstockschalter dargestellt. Wie ersichtlich, weist dieser Schalter 1 ein Grundteil 2 auf, in welchem ein Drehpunkt 3 angeordnet ist. Um diesen Drehpunkt 3 ist ein Schaltteil 4, beispielsweise ein Schalthebel, bewegbar.

In dem Schaltteil 4 ist in einer Ausnehmung ein erstes Rastelement 7 angeordnet, welches von einer Druckfeder 8 beaufschlagt wird.

Das Grundteil 2 weist eine erste Rastkurve 5 auf, welche mit Verrastungen 6 ausgestattet ist. Bei dem Ausführungsbeispiel nach Fig. 1 ergeben sich infolge der Gestaltung der Verrastungen 6 die Schaltstellungen 0, I, II und III. Durch diese Bewegung des Schalthebels 4 um den Drehpunkt 3 und die Fixierung in den entsprechenden Verrastungen werden nicht näher dargestellte elektrische Kontakte geöffnet oder geschlossen, so daß entsprechende Vorgänge ausgelöst oder beendet werden können, beispielsweise Standlicht, Fernlicht oder verschiedene Geschwindigkeiten einer Scheibenwischeranlage.

Wie ersichtlich, ist der ersten Rastkurve 5 eine weitere Rastkurve 10 nachgeordnet, welche in Form einer stetigen Kurve ausgebildet ist. Mit dieser zweiten Rastkurve 10 arbeitet ein zweites Rastelement 14 zusammen, welches ebenfalls in dem Schalthebel 4 gelagert ist und von einer Feder 11 beaufschlagt wird.

Die zweite Rastkurve 10 kann beispielsweise als Gerade, als Sinoide, als Teil einer Hyperbel, einer Spirale, eines Kreises oder einer Parabel oder einer Kombination davon ausgebildet sein. Alternativ besteht auch die nicht näher dargestellte Möglichkeit, daß die zweite Rastkurve 10 als Druck-, Blatt- oder Spiralfeder ausgestaltet ist.

Die Schaltwinkel der Verrastungen 6 der ersten Schaltkurve 5 sind jeweils gleich ausgebildet, weisen beispielsweise einen Winkel von maximal 10° auf. Der gesamte Schaltbereich 0 - III des Schaltteils 4 kann maximal 40° betragen.

In Fig. 2 ist als Beispiel für eine Vorgabe eines Kraft-Weg-Diagramms für einen Lenkstockschalter dargestellt. Die Abszisse stellt hierbei den Weg S, die Ordinate die Kraft F dar. Wie ersichtlich, wird z.B. beim Einschalten eine andere Einschaltkraft vorgegeben als die Ausschaltkraft betragen soll.

Fig. 3 zeigt ein durch die vorliegende Erfindung realisiertes Kraft-Weg-Diagramm für den erfindungsgemäßen Lenkstockschalter nach Fig. 1. Es ist erkennbar, daß durch die erfindungsgemäße Konstruktion nahezu die Vorgabe nach Fig. 2 erreicht wird: Die Einschaltkraft, d.h. die Höhe des einen Kurvenverlaufs, unterscheidet sich von der Ausschaltkraft, d.h. von der Höhe des anderen Kurvenverlaufs.

Die beiden Rastkurven 5 und 10 wirken wie folgt: Bei Betätigen des Schaltteils 4 aus der 0-Position addieren sich die Kräfte aus der ersten Rastkurve 5 und der zweiten Rastkurve 10. Beim Überschreiten des Wendepunktes der ersten Rastkurve 5 ändert sich die Kraft dieser Rastkurve schlagartig in ihrer Richtung. Durch das Kräfteverhältnis der beiden Rastkurven 5 und 10 erhält man den in Fig. 3 dargestellten Kräfteverlauf.

Beim Zurückschalten des Schaltteils 4 unterstützt die zweite Rastkurve 10 den Schaltvorgang.

Durch die Kombination beider Rastkurven kann bei geeigneter Auslegung der Federkräfte und Schaltwege ein nahezu optimales Kraft-Weg-Diagramm für einen Lenkstockschalter (Fig. 3) erreicht werden.

Die beiden Rastkurven brauchen nicht unbedingt hintereinander angewendet zu sein; es bestehen auch die nicht näher dargestellten Möglichkeiten, beide Rastkurven nebeneinander oder versetzt nebeneinander anzuordnen.

## Patentansprüche

1. Schalter, insbesondere Lenkstockschalter, mit einem Grundteil und einem darin in einem Drehpunkt gelagerten Schaltteil, wobei durch ein federbeaufschlagtes, in wenigstens drei Verrastungen einer Rastkurve eingreifbares Rastelement wenigstens drei verschiedene Schaltstellungen des Schaltteils erreichbar sind,
**dadurch gekennzeichnet**,
daß zur Erreichung je nach Bewegungsrichtung des Schaltteils (4) unterschiedlicher Schaltmomente ein mit einer zweiten Rastkurve (10) zusammenwirkendes zweites federbeaufschlagtes Rastelement (14) vorgesehen ist,
daß das zweite Rastelement (14) mit dem ersten Rastelement (7) verbunden ist und
daß die Federbeaufschlagung des zweiten Rastelements (14) und der Kurvenverlauf der zweiten Rastkurve (10) so gewählt sind, daß sich über den gesamten Schaltbereich bei gleicher Bewegungsrichtung des Schaltteils (4) von einer Schaltstellung in eine benachbarte Schaltstellung ein im wesentlichen gleiches Schaltmoment ergibt.

2. Schalter nach Anspruch 1,
dadurch gekennzeichnet, daß
das Schaltteil (4) die beiden Schaltelemente (7, 14) und das Grundteil (2) die beiden Rastkurven (5, 10) aufweist.

3. Schalter nach Anspruch 1 und 2,
dadurch gekennzeichnet, daß
die zweite Rastkurve (10) einen glatten Kurvenverlauf aufweist.

4. Schalter nach Anspruch 3,
dadurch gekennzeichnet, daß
die zweite Rastkurve (10) als Gerade, als Sinoide, als Teil einer Hyperbel, einer Spirale, eines Kreises oder einer Parabel oder einer Kombination vorgenannter Kurvenverläufe ausgebildet ist.

5. Schalter nach Anspruch 3,
dadurch gekennzeichnet, daß
die zweite Rastkurve (10) als Druck-, Blatt-, oder Spiralfeder ausgebildet ist.

6. Schalter nach einem der vorhergehenden Ansprüche,
dadurch gekennzeichnet, daß
die zweite Rastkurve (10) unmittelbar an die erste Rastkurve (5) anschließt.

7. Schalter nach einem der vorhergehenden Ansprüche 1 bis 5,
dadurch gekennzeichnet, daß
beide Rastkurven nebeneinander oder versetzt nebeneinander angeordnet sind.

8. Schalter nach einem der vorhergehenden Ansprüche,
dadurch gekennzeichnet, daß
der Schaltwinkel zwischen zwei Verrastungen (0, I, II, III) der ersten Rastkurve (5) jeweils gleich ist.

## Claims

1. Switch, in particular steering column switch, with a base part and with a switching part mounted at a centre of rotation in the latter, at least three different switching positions of the switching part being obtainable by means of a spring-loaded detent element capable of engaging into at least three notches of a detent cam, characterized in that, in order to achieve switching torques which differ according to the direction of movement of the switching part (4), a second spring-loaded detent element (14) cooperating with a second detent cam (10) is provided, in that the second detent element (14) is connected to the first detent element (7), and in that the spring loading of the second detent element (14) and the cam profile of the second detent cam (10) are selected in such a way that a substantially identical switching torque is obtained over the entire switching range when the direction of movement of the switching part (4) from one switching position into an adjacent switching position is the same.

2. Switch according to Claim 1, characterized in that the switching part (4) has the two switching elements (7, 14) and the base part (2) has the two detent cams (5, 10).

3. Switch according to Claims 1 and 2, characterized in that the second detent cam (10) has a smooth cam profile.

4. Switch according to Claim 3, characterized in that the second detent cam (10) is designed as a straight line, as a sinusoid, as part of a hyperbola, of a spiral, of a circle or of a parabola or of a combination of the said curve profiles.

5. Switch according to Claim 3, characterized in that the second detent cam (10) is designed as a compression, leaf or helical spring.

6. Switch according to one of the preceding claims, characterized in that the second detent cam (10) directly adjoins the first detent cam (5).

7. Switch according to one of the preceding Claims 1 to 5, characterized in that the two detent cams are arranged next to one another or offset next to one another.

8. Switch according to one of the preceding claims, characterized in that the switching angle between two notches (0, I, II, III) of the first detent cam (5) is identical in each case.

## Revendications

1. Commutateur, notamment commutateur fixé à une colonne de direction, comprenant une partie d'embase et une partie de commutation montée dans cette dernière en un point de rotation, au moins trois positions différentes de commutation de la partie de commutation pouvant être atteintes par l'intermédiaire d'un élément encliquetable sollicité élastiquement,et pouvant pénétrer dans au moins trois crans d'une came d'encliquetage,
caractérisé par le fait
qu'un second élément encliquetable (14) sollicité élastiquement, coopérant avec une seconde came d'encliquetage (10), est prévu pour atteindre différents couples de commutation en fonction de la direction du mouvement de la partie de commutation (4) ;
que le second élément encliquetable (14) est relié au premier élément encliquetable (7) ; et
que la sollicitation élastique du second élément encliquetable (14) et l'allure de la courbe de la seconde came d'encliquetage (10) sont choisies de telle sorte qu'on obtienne un couple de commutation pour l'essentiel identique sur toute la plage de commutation, d'une position de commutation à une position de commutation voisine, pour une même direction de mouvement de la partie de commutation (4).

2. Commutateur selon la revendication 1,
caractérisé par le fait que
la partie de commutation (4) présente les deux éléments commutateurs (7, 14), et la partie d'embase (2) présente les deux cames d'encliquetage (5, 10).

3. Commutateur selon les revendications 1 et 2,
caractérisé par le fait que
la seconde came d'encliquetage (10) présente une allure de courbe uniforme.

4. Commutateur selon la revendication 3,
caractérisé par le fait que
la seconde came d'encliquetage (10) est réalisée sous la forme d'une droite, d'une sinusoïde, d'une partie d'une hyperbole, d'une spirale, d'une circonférence ou d'une parabole, ou bien d'une combinaison des allures de courbes précitées.

5. Commutateur selon la revendication 3,
caractérisé par le fait que
la seconde came d'encliquetage (10) est réalisée sous la forme d'un ressort de pression, d'une lame de ressort ou d'un ressort hélicoïdal.

6. Commutateur selon l'une des revendications précédentes,
caractérisé par le fait que
la seconde came d'encliquetage (10) se trouve dans la continuité directe de la première came d'encliquetage (5).

7. Commutateur selon l'une des revendications précédentes 1 à 5,
caractérisé par le fait que
les deux cames d'encliquetage sont agencées en juxtaposition ou en juxtaposition décalée.

8. Commutateur selon l'une des revendications précédentes,
caractérisé par le fait que
l'angle de commutation est, à chaque fois,identique entre deux crans (0, I, II, III) de la première came d'encliquetage (5).
